# EUROPEAN PATENT SPECIFICATION

(11) **EP 2 644 745 B1**
(45) Date of publication and mention of the grant of the patent: **07.01.2015**
(21) Application number: 13161372.1
(22) Date of filing: 27.03.2013
(51) Int. Cl.: C23C 22/68, C09D 5/08

(54) **Metal protective coating, the use thereof, and hot-dip metallic material using the same**
Metallschutzbeschichtung, Verwendung davon und feuermetallisiertes Material damit
Revêtement de protection métallique, son utilisation et matériau métallique par immersion à chaud utilisant celui-ci

(30) Priority: 31.03.2012 CN 201210091770
(43) Date of publication of application: 02.10.2013
(73) Proprietor: Pangang Group Panzhihua Iron & Steel Research Institute Co., Ltd., Sichuan 617000 (CN)
(72) Inventor: Xu, Zhefeng, 617000 Sichuan Province (CN); Mei, Dongsheng, 617000 Sichuan Province (CN); Chen, Yong, 617000 Sichuan Province (CN); Xu, Quan, 617000 Sichuan Province (CN); Lou, Yan, 617000 Sichuan Province (CN); Zhou, Yilin, 617000. Sichuan Province (CN)
(74) Representative: Tischner, Oliver

(56) References cited:
- WO-A2-2009/084849
- US-A1- 2004 062 873
- US-A1- 2011 263 751
- US-B1- 6 309 708

## Description

### Cross Reference to Related Applications

This application claims priority to Chinese Application No. 201210091770.2, filed on March 31, 2012, entitled "Metal Protective Coating, the use thereof, and Hot-Dip Metallic Material".

### Technical Field

The present invention relates to metal protection, in particular to a metal protective coating, the use thereof, and a hot-dip metallic material.

### Background

Hot-dip metallic materials, including hot-dip Zn metallic materials and hot-dip Al-Zn metallic materials, are coated with a layer of metal protective coating on the surface to form a protective film, so as to prevent corrosion. Therefore, the properties of the metal protective coating are very important for corrosion protection of hot-dip metallic materials. For example, the Chinese Patent Application No. CN101608306A discloses a passivating liquid, which also belongs to a metal protective coating, wherein, the passivating agent is a water solution that contains water soluble molybdenum compound, boric acid, water soluble organic substance, and silicasol, and the water soluble organic substance is a mixture of alcohol and organic carboxylic acid.

However, experiments have shown that the corrosion resistance, water resistance, thermal resistance, and fingerprint resistance of the protective film formed by the metal protective coating are still not good enough.

The patent application WO 2009/084849 A2 discloses a chromium-free coating composition for hot-dip galvanized steel sheet able to prevent corrosion of metallic surfaces, and a process wherein hot-dip galvanized steel sheet is coated with the coating composition and dried at 120°C, wherein the coating thickness is 1000 mg/m².

The patent US 6,309,708 B1 discloses a method of stain-proofing a surface by applying a paint composition comprising tris(methylethylketoxime) silane as a coupling agent.

### Summary of the Invention

The object of the present invention is to overcome the drawbacks of protective films formed by existing metal protective coating materials in corrosion resistance, water resistance, thermal resistance, and fingerprint resistance, and provides a metal protective coating that can form a protective film with high corrosion resistance, high water resistance, high thermal resistance, and high fingerprint resistance properties.

To attain the above-mentioned object, the present invention provides a metal protective coating, which is obtained by mixing homogeneously a raw mixture, which contains water soluble silicate, silicon oxide packing, water soluble film formation resin, CH₃Si(ONC(CH₃)CH₂CH₃)₃ and water, as defined in claim 1.

The present invention further provides the use of the above-mentioned metal protective coating in peparing metallic material.

The present invention further provides a hot-dip metallic material, which comprises a hot-dip metallic substrate and a coating layer attached to the hot-dip metallic substrate, the hot-dip metallic substrate is hot-dip metallic Zn substrate and/or a hot-dip metallic Al-Zn substrate, wherein, the coating layer is the cured product of the above-mentioned metal protective coating.

With the above technical solution, the protective film formed by the metal protective coating provided in the present invention has outstanding corrosion resistance, water resistance, thermal resistance, and fingerprint resistance properties.

Other characteristics and advantages of the present invention will be further detailed in the embodiments hereunder.

### Detailed Description of the Embodiments

Hereunder the embodiments of the present invention will be detailed. It should be understood that the embodiments described here are only provided to describe and explain the present invention, but shall not be deemed as any limitation to the present invention.

The metal protective coating provided in the present invention is obtained by mixing homogeneously a raw mixture, which contains water soluble silicate, silicon oxide packing, water soluble film formation resin, CH₃Si(ONC(CH₃)CH₂CH₃)₃ and water , wherein on the basis of 1 part by weight water soluble silicate, the dosage of CH₃Si(ONC(CH₃)CH₂CH₃)₃ is 0.5-4.5 parts by weight, the dosage of the silicon oxide packing is 0.25-2.2 parts by weight, the dosage of the water soluble film formation resin calculated in solid substance is 0.8-6.8 parts by weight, and the dosage of water is 10-100 parts by weight.

Wherein, CH₃Si(ONC(CH₃)CH₂CH₃)₃ is named as methyltris(methylethylketoxime)silane, whose structure is chemical formula is shown as formula (1), and can be applied as silane coupling agent. Any available CH₃Si(ONC(CH₃)CH₂CH₃)₃ in the market which is able to be applied as silane coupling agent, can be applied in the present invention.

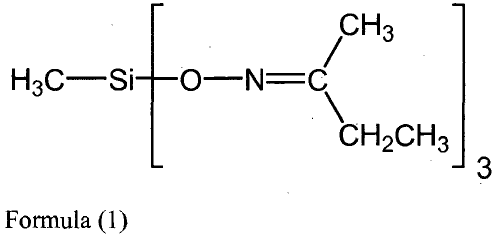

Wherein, the metal protective coating is obtained by mixing the raw mixture homogeneously, and is stable and homogeneous liquid. Preferably, the components of the raw mixture are mixed homogeneously within 1-180 days before the metal protective coating is applied. Wherein, there is no special requirement for the mixing order of the components, which is to say, the components of the raw mixture can be mixed directly at the same time, in batches, or in steps, as long as a homogeneous and stable phase is obtained; preferably, the mixture is agitated while the components are mixed, to make the mixture more homogeneous.

In the metal protective coating provided in the present invention, relative to 1pbw water soluble silicate, the dosage of CH₃Si(ONC(CH₃)CH₂CH₃)₃ can be 0.5-4.5pbw, preferably 1.4-1.8pbw.

Wherein, relative to 1pbw water soluble silicate, the dosage of the silicon oxide packing can be 0.25-2.2pbw, preferably 0.6-0.85pbw.

Wherein, relative to 1pbw water soluble silicate, calculated in solid substance, the dosage of the water soluble film formation resin can be 0.8-6.8pbw, preferably 2.1-2.7pbw. Herein, the "solid substance" has the same definition as solid substance used in calculating and representing "the content of solid substance", i.e., herein, the "solid substance" means the remaining substance after solvent is removed from the water soluble film formation resin. Wherein, relative to 1pbw water soluble silicate, the dosage of water can be 10-100pbw, preferably 25-40pbw.

In the metal protective coating provided in the present invention, the water soluble silicate can be sodium silicate and/or potassium silicate.

In the metal protective coating provided in the present invention, wherein, there is no special requirement for the silicon oxide packing, which is to say, the silicon oxide packing can be any silicon oxide-based packing material, for example, the silicon oxide packing can be nanometer silicon dioxide powder and/or silicasol; preferably, the silicon oxide packing is nanometer silicon dioxide powder, with 10-90nm particle size.

In the metal protective coating provided in the present invention, the water soluble film formation resin can be any water-soluble modified or unmodified resin that can form a film; there is no special requirement for the water-soluble film formation resin in the present invention; for example, the water-soluble film formation resin can be at least one selected from the group consisting of water-soluble polyester film formation resin (i.e., the water-soluble film formation resin prepared by polymerization of polyol monomers and polyacid monomers, e.g., polyester resin CB2200 from Guangzhou LAPO Fine Chemical Co., Ltd.), water-soluble styrene-acrylic film formation resin (i.e., the water-soluble film formation resin prepared by polymerization of styrene monomers and acrylic acid(ester) monomers, e.g., styrene-acrylic emulsion xy-108b from Guangzhou Chaolong Chemical Technology Co., Ltd.), water-soluble epoxy film formation resin (i.e., the water-soluble film formation resin prepared by polymerization of monomers containing epoxy group, e.g., epoxy resin BH620 from Dongguan Heima Chemical Co., Ltd.), water-soluble polyurethane film formation resin (i.e., the water-soluble film formation resin prepared by polymerization of poly isocyanate monomers and poly hydroxy monomers, e.g., polyurethane resin 812 from Fujian Jinjiang Jianhua Co., Ltd.), water-soluble silicone-acrylic film formation resin (i.e., the water-soluble film formation resin prepared by polymerization of organosilicone monomers and acrylic acid(ester) monomers, e.g., silicone-acrylic emulsion TC-05 from Qingdao Xingguo Paint Co., Ltd., with 48 wt.% solid content), water-soluble acrylic film formation resin (i.e., the water-soluble film formation resin prepared by polymerization of acrylic acid(ester) monomers, e.g., acrylic resin A-3418 from Guangzhou Oupeng Chemical Co., Ltd.), and water-soluble fluorocarbon film formation resin (i.e., the water-soluble film formation resin prepared by polymerization of fluorocarbon monomers, e.g., aqueous fluorocarbon emulsion SKFT-I from Beijing Sokang Nano Technology Co., Ltd.); preferably, the water soluble film formation resin is at least one selected from the group consisting of water soluble styrene-acrylic film formation resin, water soluble epoxy film formation resin, water-solubility silicone-acrylic film formation resin, water soluble acrylic film formation resin, water soluble polyurethane film formation resin, and water soluble polyester film formation resin.

Besides the components described above, the metal protective coating provided in the present invention can further comprise other components that don't have adverse effect to the properties of the metal protective coating, such as one or more of dye, pigment, dispersing agent, and anti-foaming agent. On the basis of the total weight of the metal protective coating, the total content of other components doesn't exceed 20 wt.%, preferably doesn't exceed 10 wt.%. The anti-foaming agent can be any anti-foaming agent well-known in the art, such as one or more of polyether anti-foaming agent, high alcohol, silicon anti-foaming agent, and polyether modified silicone anti-foaming agent, etc. More specifically, the anti-foaming agent can be one or more of the SD-401 series anti-foaming agents purchased from Dongying Shidachuangxin Science & Technology Co. Ltd.. Preferably, on the basis of the total weight of the metal protective coating, the content of the anti-foaming agent is 0.01-0.05 wt.%.

The metal protective coating provided in the present invention can be directly used, and the dilution is not necessary.

The present invention further provides the use of the above-mentioned metal protective coating in peparing metallic material. The above-mentioned metal protective coating can be used with the ordinary mode in the art in peparing metallic material.

The present invention further provides a hot-dip metallic material, which comprises a hot-dip metallic substrate and a coating layer attached to the hot-dip metallic substrate, the hot-dip metallic substrate is hot-dip metallic Zn substrate and/or a hot-dip metallic Al-Zn substrate, wherein, the coating layer is the cured product of the above-mentioned metal protective coating.

Wherein, the hot-dip Zn metallic substrate is a metallic substrate which has zinc plating, and in the zinc plating the zinc content can be 92.5-95.5 wt.%. The zinc plating can also contain other components conventionally used in the zinc plating, such as silicon. Wherein, the hot-dip Al-Zn metallic substrate is a metallic substrate which has Al-Zn plating, and in Al-Zn plating the Zn content can be 41.5-43.5 wt.% and the A1 content can be 51.5-55.0 wt.%. The Al-Zn plating can also contain other components conventionally used in the Al-Zn plating, such as silicon.

In the hot-dip metallic material provided in the present invention, the thickness of the coating layer can be normal thickness of corrosion-resistant coating layer of hot-dip metallic material; to improve the performance of the coat, preferably the thickness of the coating layer is 0.05-2µm, more preferably 0.1-1µm.

In the hot-dip metallic material provided in the present invention, the method for attaching the coat to the hot-dip metallic substrate can comprise: applying the metal protective coating to the surface of the hot-dip metallic substrate, and then drying, wherein, the drying temperature can be 60-120, preferably 90-110°C, and the drying duration can be 0.5-3s. The dosage of the metal protective coating can be determined according to the thickness of the coating layer.

Wherein, the drying method can be selected from one or more of hot air drying, induction heating, and infrared radiation heating.

In the present invention, unless otherwise specified, the volume of any liquid or solid refers to the volume at 20°C under standard atmospheric pressure.

Hereunder the present invention will be further detailed in Examples.

### Example 1

Mix 1 pbw water soluble silicate (Na₂SiO₃, purchased from Baoding Runfeng Industry Co., Ltd.), 1.6 pbw CH₃Si(ONC(CH₃)CH₂CH₃)₃ (purchased from Hubei Power the Silicon and Fluorine Technology Co., Ltd. Corresponding model LMD-923), 0.72 pbw silicon oxide packing (nanometer silicon dioxide powder, purchased from GE (USA), RNS-E, with 20nm average particle size), 2.4 pbw (calculated in solid substance) water soluble film formation resin (water soluble silicone-acrylic film formation resin (silicone-acrylic emulsion TC-05 purchased from Qingdao Xingguo Paint Co., Ltd., with 48 wt.% solid content), and 28 pbw water to homogeneous state, with agitation at 1,500 rpm agitation speed, to obtain the metal protective coating in this Example.

### Example 2

Mix 1 pbw water soluble silicate (K₂SiO₃, purchased from Baoding Runfeng Industry Co., Ltd.), 1.4 pbw CH₃Si(ONC(CH₃)CH₂CH₃)₃ (purchased from Hubei Power the Silicon and Fluorine Technology Co., Ltd. Corresponding model LMD-923), 0.6 pbw silicon oxide packing (nanometer silicon dioxide powder, purchased from GE (USA), RNS-E, with 20nm average particle size), 2.1 pbw (calculated in solid substance) water soluble film formation resin (water soluble acrylic film formation resin (acrylic resin A-3418 purchased from Guangzhou Oupeng Chemical Co., Ltd.), and 25 pbw water to homogeneous state, with agitation at 1,500 rpm agitation speed, to obtain the metal protective coating in this Example.

### Example 3

Mix 1 pbw water soluble silicate (Na₂SiO₃, purchased from Baoding Runfeng Industry Co., Ltd.), 0.7 pbw promoter (carboxyethyl cellulose), 1.8 pbw CH₃Si(ONC(CH₃)CH₂CH₃)₃ (purchased from Hubei Power the Silicon and Fluorine Technology Co., Ltd. Corresponding model LMD-923), 0.85 pbw silicon oxide packing (30 wt.% silicasol, calculated in solid substance), 2.7 pbw (calculated in solid substance) water soluble film formation resin (water soluble polyurethane film formation resin (polyurethane resin 812 purchased from Fujian Jinjiang Jianhua Co., Ltd.), and 40 pbw water to homogeneous state, with agitation at 1,500 rpm agitation speed, to obtain the metal protective coating in this Example.

### Example 4

Mix 1 pbw water soluble silicate (Na₂SiO₃, purchased from Baoding Runfeng Industry Co., Ltd.), 0.6 pbw CH₃Si(ONC(CH₃)CH₂CH₃)₃ (purchased from Hubei Power the Silicon and Fluorine Technology Co., Ltd. Corresponding model LMD-923), 2.1 pbw silicon oxide packing (nanometer silicon dioxide powder, purchased from GE (USA), RNS-E, with 20nm average particle size), 6.5 pbw (calculated in solid substance) water soluble film formation resin (water soluble silicone-acrylic film formation resin (silicone-acrylic emulsion TC-05 purchased from Qingdao Xingguo Paint Co., Ltd., with 48 wt.% solid content), and 90 pbw water to homogeneous state, with agitation at 1,500 rpm agitation speed, to obtain the metal protective coating in this Example.

### Example 5

Mix 1 pbw water soluble silicate (Na₂SiO₃, purchased from Baoding Runfeng Industry Co., Ltd.), 4.5 pbw CH₃Si(ONC(CH₃)CH₂CH₃)₃ (purchased from Hubei Power the Silicon and Fluorine Technology Co., Ltd. Corresponding model LMD-923), 0.3 pbw silicon oxide packing (nanometer silicon dioxide powder, purchased from GE (USA), RNS-E, with 20nm average particle size), 1.0 pbw (calculated in solid substance) water soluble film formation resin (water soluble silicone-acrylic film formation resin (silicone-acrylic emulsion TC-05 purchased from Qingdao Xingguo Paint Co., Ltd., with 48 wt.% solid content), and 15 pbw water to homogeneous state, with agitation at 1,500 rpm agitation speed, to obtain the metal protective coating in this Example.

### Example 6

Produce the metal protective coating with the method described in Example 1, with the following difference: water soluble styrene-acrylic film formation resin (styrene-acrylic emulsion xy-108b, purchased from Guangzhou Chaolong Chemical Technology Co., Ltd.) is used as the water soluble film formation resin.

### Example 7

Produce the metal protective coating with the method described in Example 1, with the following difference: water-soluble epoxy film formation resin (epoxy resin BH620, perchased from Dongguan Heima Chemical Co., Ltd.) is used as the water soluble film formation resin.

### Example 8

Produce the metal protective coating with the method described in Example 1, with the following difference: water soluble polyester film formation resin (water soluble polyester PE-10030-P, purchased from Jiangsu Yancheng Juke Chemical Co., Ltd.) is used as the water soluble film formation resin.

### Comparative Example 1

Produce the metal protective coating with the method described in Example 1, with the following difference: CH₃Si(ONC(CH₃)CH₂CH₃)₃ is substituted with aminopropyltriethoxysilane (purchased from Hubei Power the Silicon and Fluorine Technology Co., Ltd. Corresponding model LMD-1100).

### Comparative Example 2

Produce the metal protective coating with the method described in Example 1, with the following difference: the water soluble silicate is not added.

### Comparative Example 3

Produce the metal protective coating with the method described in Example 1, with the following difference: the silicon oxide packing is not added.

### Preparation Example 1

Take the metal protective coating obtained in Examples 1-8 and the metal protective coating obtained in comparative Examples 1-3, and apply them on Zn plating steel sheets (model DX54D, purchased from Pangang Group Panzhihua Vanadium & Titanium Co., Ltd., with 95 wt.% Zn in the Zn plating) respectively, dry for 2 s by hot air drying at 90-110°C, to obtain treated Zn plating steel sheets 1-11. Wherein, the dosage of the metal protective coating is determined appropriately so that the thickness of the coating layer of the Zn plating steel sheets 1-11 is 0.8 µm. The thickness of the coating layer is the value measured with an XRF unit (X-RAY fluorescent spectrometer).

### Preparation Example 2

Take the metal protective coating materials obtained in Examples 1-8 and the metal protective coating materials obtained in comparative Examples 1-3, and apply them on Al-Zn plating steel sheets (model DXS1D+AZ, purchased from Pangang Group Panzhihua Vanadium & Titanium Co., Ltd., with 42.5 wt.% Zn and 52.3 wt.% A1 in the Al-Zn plating) respectively, dry for 2 s by hot air drying at 90-110°C, to obtain treated Al-Zn plating steel sheets 1-11. Wherein, the dosage of the metal protective coating is determined appropriately so that the thickness of the coating layer of the Al-Zn plating steel sheets 1-11 is 0.8 µm. The thickness of the coating layer is the value measured with an XRF unit (X-RAY fluorescent spectrometer).

### Testing Example 1

Carry out neutral salt spray test as per GB/T10125-1997, and measure the corrosion-resistance performance of Zn plating steel sheets 1-11 and Al-Zn plating steel sheets 1-11. The sheets are evaluated as acceptable according to the criterion "percentage of corroded area <20% after 96h salt spray test".

Measure the water resistance performance of Zn plating steel sheets 1-11 and Al-Zn plating steel sheets 1-11 with the following method.

Add approx. 2ml boiling water in droplets onto the surfaces of horizontally laid Zn plating steel sheets 1-11 and Al-Zn plating steel sheets 1-11, let the sheets to dry for 24 naturally, attach a 3M adhesive tape to the part where the water droplets are dropped, peel off the adhesive tape and count the stain spots, and judge the water resistance performance of the film according to the number of stain spots per square centimeters on the adhesive tape. The more the stain spots are, the poorer the water resistance performance is.

Measure the thermal resistance performance of Zn plating steel sheets 1-11 and Al-Zn plating steel sheets 1-11 with the following method.

Load Zn plating steel sheets 1-11 and Al-Zn plating steel sheets 1-11 into a hot-blast furnace, bake for 20min., at 300°C, and then take them out and check whether there is any morphological change on the coating surface, measure the ΔL (luminance variable), Δa (red and green variable), and Δb (yellow and blue variable) of sample surface before and after baking with a colorimeter, and calculate ΔE (chromatic aberration)=(ΔL²+Δa²+Δb²)^{1/2}. The smaller the ΔE is, the higher the thermal resistance performance of the coating is.

Measure the fingerprint resistance performance of Zn plating steel sheets 1-11 and Al-Zn plating coated steel sheets 1-11 with the following method.

Measure the ΔL (luminance variable), Δa (red and green variable), and Δb (yellow and blue variable) of Zn plating steel sheets 1-11 and Al-Zn plating steel sheets 1-11 before and after 0.5g/m² Vaseline is applied with a colorimeter, and calculate the ΔE (chromatic aberration)=(ΔL²+Δa²+Δb²)^{1/2}; the smaller the ΔE is, the higher the fingerprint resistance performance is.

The testing results are shown in Table 1.

**Table 1**

| Sample | Percent of Pass in Salt Spray Test (%) | Water Resistance (Stain Spots) | Thermal Resistance (ΔE) | Fingerprint Resistance (ΔE) |
|---|---|---|---|---|
| Zn plating steel sheet 1 | 95 | 9 | 1.25 | 1.38 |
| Zn plating steel sheet 2 | 94 | 10 | 1.27 | 1.35 |
| Zn plating steel sheet 3 | 93 | 11 | 1.26 | 1.34 |
| Zn plating steel sheet 4 | 91 | 14 | 1.42 | 1.59 |
| Zn plating steel sheet 5 | 90 | 15 | 1.45 | 1.57 |
| Zn plating steel sheet 6 | 94 | 10 | 1.31 | 1.42 |
| Zn plating steel sheet 7 | 93 | 11 | 1.29 | 1.45 |
| Zn plating steel sheet 8 | 93 | 11 | 1.28 | 1.41 |
| Zn plating steel sheet 9 | 80 | 35 | 2.53 | 2.29 |
| Zn plating steel sheet 10 | 81 | 33 | 2.51 | 2.27 |
| Zn plating steel sheet 11 | 79 | 25 | 2.35 | 2.24 |
| | | | | |
| Al-Zn plating steel sheet 1 | 94 | 10 | 1.27 | 1.40 |
| Al-Zn plating steel sheet 2 | 93 | 11 | 1.29 | 1.37 |
| Al-Zn plating steel sheet 3 | 92 | 12 | 1.28 | 1.36 |
| Al-Zn plating steel sheet 4 | 90 | 15 | 1.44 | 1.61 |
| Al-Zn plating steel sheet 5 | 89 | 16 | 1.47 | 1.59 |
| Al-Zn plating steel sheet 6 | 93 | 11 | 1.33 | 1.44 |
| Al-Zn plating steel sheet 7 | 92 | 12 | 1.31 | 1.47 |
| Al-Zn plating steel sheet 8 | 92 | 12 | 1.30 | 1.43 |
| Al-Zn plating steel sheet 9 | 79 | 36 | 2.55 | 2.31 |
| Al-Zn plating steel sheet 10 | 80 | 34 | 2.53 | 2.29 |
| Al-Zn plating steel sheet 11 | 78 | 26 | 2.37 | 2.26 |

It can be seen from the data in Table 1 that, the protective film formed by the metal protective coating provided in the present invention has outstanding corrosion resistance, water resistance, thermal resistance, and fingerprint resistance properties.

In addition, in the preferable case that relative to 1 part by weight water soluble silicate, the dosage of CH₃Si(ONC(CH₃)CH₂CH₃)₃ is 1.4-1.8 parts by weight, the dosage of the silicon oxide packing is 0.6-0.85 part by weight, the dosage of the water soluble film formation resin calculated in solid substance is 2.1-2.7 parts by weight, and the dosage of water is 25-40 parts by weight, the corrosion resistance, water resistance, thermal resistance, and fingerprint resistance properties of the protective film formed by the metal protective coating can be further improved.

While some preferred embodiments of the present invention are described above, the present invention is not limited to the details in those embodiments.

In addition, it should be noted: the specific technical features described in above embodiments can be combined in any appropriate form, provided that there is no conflict. To avoid unnecessary repetition, the possible combinations are not described specifically in the present invention.

## Claims

1. A metal protective coating, which is obtained by mixing homogeneously a raw mixture, which contains water soluble silicate, silicon oxide packing, water soluble film formation resin, CH₃Si(ONC(CH₃)CH₂CH₃)₃ and water, wherein on the basis of 1 part by weight water soluble silicate, the dosage of CH₃Si(ONC(CH₃)CH₂CH₃)₃ is 0.5-4.5 parts by weight, the dosage of the silicon oxide packing is 0.25-2.2 parts by weight, the dosage of the water soluble film formation resin calculated in solid substance is 0.8-6.8 parts by weight, and the dosage of water is 10-100 parts by weight.

2. The metal protective coating according to claim 1, wherein relative to 1 part by weight water soluble silicate, the dosage of CH₃Si(ONC(CH₃)CH₂CH₃)₃ is 1.4-1.8 parts by weight, the dosage of the silicon oxide packing is 0.6-0.85 part by weight, the dosage of the water soluble film formation resin calculated in solid substance is 2.1-2.7 parts by weight, and the dosage of water is 25-40 parts by weight.

3. The metal protective coating according to any one of claims 1 to 2, wherein the water soluble silicate is sodium silicate and/or potassium silicate.

4. The metal protective coating according to any one of claims 1 to 3, wherein the silicon oxide packing is silicon dioxide nano-powder and/or silicasol.

5. The metal protective coating according to any one of claims 1 to 4, wherein the water soluble film formation resin is at least one selected from the group consisting of water soluble polyester film formation resin, water soluble styrene-acrylic film formation resin, water soluble epoxy film formation resin, water soluble polyurethane film formation resin, water soluble silicone-acrylic film formation resin, water soluble acrylic film formation resin, and water soluble fluorocarbon film formation resin.

6. The metal protective coating according to any one of claims 1 to 5, wherein the metal protective coating further comprises one or more of dye, pigment, dispersing agent, and anti-foaming agent.

7. Use of a metal protective coating according to any one of claims 1 to 6 in preparing metallic material.

8. A hot-dip metallic material, which comprises a hot-dip metallic substrate and a coating layer attached to the hot-dip metallic substrate, the hot-dip metallic substrate is hot-dip metallic Zn substrate and/or a hot-dip metallic Al-Zn substrate, wherein, the coating layer is the cured product of the metal protective coating according to any one of claims 1 to 6.

9. The hot-dip metallic material according to claim 8, wherein the thickness of the coating layer is 0.1-1µm.

## Patentansprüche

1. Metallschutzbeschichtung, die durch homogenes Vermischen einer Rohmischung erhalten wird, die wasserlösliches Silikat, eine Siliciumoxidpackung, wasserlösliches Filmbildungsharz, CH₃Si(ONC(CH₃)CH₂CH₃)₃ und Wasser enthält, wobei bezogen auf 1 Gewichtsteil wasserlösliches Silikat die Dosierung von CH₃Si(ONC(CH₃)CH₂CH₃)₃ 0,5 bis 4,5 Gewichtsteile beträgt, die Dosierung der Siliciumoxidpackung 0,25 bis 2,2 Gewichtsteile beträgt, die Dosierung des wasserlöslichen Filmbildungsharzes als Festkörper berechnet 0,8 bis 6,8 Gewichtsteile beträgt und die Dosierung von Wasser 10 bis 100 Gewichtsteile beträgt.

2. Metallschutzbeschichtung nach Anspruch 1, wobei bezogen auf 1 Gewichtsteil wasserlösliches Silikat die Dosierung von CH₃Si(ONC(CH₃)CH₂CH₃)₃ 1,4 bis 1,8 Gewichtsteile beträgt, die Dosierung der Siliciumoxidpackung 0,6 bis 0,85 Gewichtsteile beträgt, die Dosierung des wasserlöslichen Filmbildungsharzes als Festkörper berechnet 2,1 bis 2,7 Gewichtsteile beträgt und die Dosierung von Wasser 25 bis 40 Gewichtsteile beträgt.

3. Metallschutzbeschichtung nach einem der Ansprüche 1 bis 2, wobei das wasserlösliche Silikat Natriumsilikat und/oder Kaliumsilikat ist.

4. Metallschutzbeschichtung nach einem der Ansprüche 1 bis 3, wobei die Siliciumoxidpackung Siliciumdioxidnanopulver und/oder Siliciumdioxid-Sol ist.

5. Metallschutzbeschichtung nach einem der Ansprüche 1 bis 4, wobei das wasserlösliche Filmbildungsharz zumindest eines ist, das aus der Gruppe ausgewählt ist, bestehend aus wasserlöslichem Polyesterfilmbildungsharz, wasserlöslichem Styrolacrylfilmbildungsharz, wasserlöslichem Epoxidfilmbildungsharz, wasserlöslichem Polyurethanfilmbildungsharz, wasserlöslichem Silikonacrylfilmbildungsharz, wasserlöslichem Acrylfilmbildungsharz und wasserlöslichem Fluorkohlenstofffilmbildungsharz.

6. Metallschutzbeschichtung nach einem der Ansprüche 1 bis 5, wobei die Metallschutzbeschichtung darüber hinaus eines oder mehreres von Farbstoff, Pigment, Dispergiermittel und Antischaummittel umfasst.

7. Verwendung einer Metallschutzbeschichtung nach einem der Ansprüche 1 bis 6 bei der Herstellung von metallischem Material.

8. Feuerveredeltes Metallmaterial, das ein feuerveredeltes Metallsubstrat und eine am feuerveredelten Metallsubstrat angebrachte Beschichtungsschicht umfasst, wobei das feuerveredelte Metallsubstrat ein feuerveredeltes Zn-Metallsubstrat und/oder ein feuerveredeltes Al-Zn-Metallsubstrat ist, wobei die Beschichtungsschicht das gehärtete Produkt der Metallschutzbeschichtung nach einem der Ansprüche 1 bis 6 ist.

9. Feuerveredeltes Metallmaterial nach Anspruch 8, wobei die Dicke der Beschichtungsschicht 0,1 bis 1 µm beträgt.

## Revendications

1. Revêtement de protection pour métal, qui est obtenu par mélange homogène d'un mélange brut qui contient un silicate soluble dans l'eau, un garnissage en oxyde de silicium, une résine de formation de film soluble dans l'eau, du CH₃Si(ONC(CH₃)CH₂CH₃)₃ et de l'eau, dans lequel, pour 1 partie en poids du silicate soluble dans l'eau, la dose de CH₃Si(ONC(CH₃)CH₂CH₃)₃ est de 0,5 à 4,5 parties en poids, la dose du garnissage en oxyde de silicium est de 0,25 à 2,2 parties en poids, la dose de la résine de formation de film soluble dans l'eau, calculée en extrait sec, est de 0,8 à 6,8 parties en poids, et la dose d'eau est de 10 à 100 parties en poids.

2. Revêtement de protection pour métal selon la revendication 1, dans lequel, pour 1 partie en poids du silicate soluble dans l'eau, la dose de CH₃Si(ONC(CH₃)CH₂CH₃)₃ est de 1,4 à 1,8 parties en poids, la dose du garnissage en oxyde de silicium est de 0,6 à 0,85 partie en poids, la dose de la résine de formation de film soluble dans l'eau, calculée en extrait sec, est de 2,1 à 2,7 parties en poids, et la dose d'eau est de 25 à 40 parties en poids.

3. Revêtement de protection pour métal selon l'une quelconque des revendications 1 et 2, dans lequel le silicate soluble dans l'eau est le silicate de sodium et/ou le silicate de potassium.

4. Revêtement de protection pour métal selon l'une quelconque des revendications 1 à 3, dans lequel le garnissage en oxyde de silicium est une nanopoudre de dioxyde de silicium et/ou un sol de silice.

5. Revêtement de protection pour métal selon l'une quelconque des revendications 1 à 4, dans lequel la résine de formation de film soluble dans l'eau est au moins l'une du groupe constitué par une résine de formation de film de polyester soluble dans l'eau, une résine de formation de film de styrène-acrylique soluble dans l'eau, une résine de formation de film époxy soluble dans l'eau, une résine de formation de film de polyuréthane soluble dans l'eau, une résine de formation de film de silicone-acrylique soluble dans l'eau, une résine de formation de film acrylique soluble dans l'eau, et une résine de formation de film de fluorocarbure soluble dans l'eau.

6. Revêtement de protection pour métal selon l'une quelconque des revendications 1 à 5, lequel revêtement de protection pour métal comprend en outre un ou plusieurs parmi un colorant, un pigment, un agent dispersant, et un agent anti-moussant.

7. Utilisation d'un revêtement de protection pour métal selon l'une quelconque des revendications 1 à 6 dans la préparation d'un matériau métallique.

8. Matériau métallique trempé à chaud qui comprend un substrat métallique trempé à chaud et une couche de revêtement attachée au substrat métallique trempé à chaud, le substrat métallique trempé à chaud étant un substrat en Zn métallique trempé à chaud et/ou un substrat en Al-Zn métallique trempé à chaud, dans lequel la couche de revêtement est le produit durci du revêtement protecteur pour métal selon l'une quelconque des revendications 1 à 6.

9. Matériau métallique trempé à chaud selon la revendication 8, dans lequel l'épaisseur de la couche de revêtement est de 0,1 à 1 µm.
